# EUROPÄISCHE PATENTANMELDUNG

(11) **EP 3 936 735 A1**
(43) Veröffentlichungstag der Anmeldung: **12.01.2022**
(21) Anmeldenummer: 21182523.7
(22) Anmeldetag: 29.06.2021
(51) Int. Cl.: F16D 1/05

(54) **DREITEILIGE SCHRUMPFSCHEIBE AUF BLOCKABSATZ**

(30) Priorität: 08.07.2020 DE 202020103940 U
(71) Anmelder: Stüwe GmbH & Co. KG, 45527 Hattingen (DE)
(72) Erfinder: Stüwe, Jan, 45549 Hattingen (DE)
(74) Vertreter: Osterhoff, Utz

(57) **Zusammenfassung**

Die Erfindung betrifft eine Schrumpfscheibe (1) zum kraft- bzw. reibschlüssigen Verbinden einer Welle mit einer Hohlwelle oder dergleichen, mit einem innenliegenden Innenring (4), dessen Außenmantelfläche zwei zueinander gegenläufige Kegelflächen (6, 7) aufweist und mit zwei äußeren Außenringen (2, 3), welche auf den Kegelflächen (6, 7) aufliegen und über Spannschrauben (5) miteinander gekoppelt sind. Die Außenringe (2, 3) weisen in ihrem Querschnitt eine voneinander verschiedene Breite (B2, B3) und die Kegelflächen (6, 7) in Relation zueinander einen verschiedenen Kegelwinkel (a, β) auf. Der Innenring (4) weist einen Anschlag (8) auf, an welchem der Außenring (3) zur Anlage kommt.

## Beschreibung

Die vorliegende Erfindung betrifft eine Schrumpfscheibe zum reibschlüssigen Verbinden einer Welle mit einer Hohlwelle gemäß den Merkmalen im Oberbegriff von Anspruch 1.

Aus dem Stand der Technik sind Schrumpfscheiben bekannt, die auch als Spannsatz bezeichnet werden.

Die Wirkung einer solchen Schrumpfscheibe bzw. Spannsatz beruht darauf, dass axiale Spannkräfte auf eine konische Wirkfläche unter Ausnutzung eines Keilprinzipes in Radialkräfte umgesetzt werden.

Somit ist es möglich, Verbindungen von Wellen und/oder Hohlwellen untereinander oder mit anderen Gegenständen herzustellen. Das Verbindungsprinzip selbst ist kraft- bzw. reibschlüssig mit der Außenmantelfläche der Welle bzw. Hohlwelle.

Aus dem Stand der Technik sind hierzu beispielsweise dreiteilige Schrumpfscheiben bekannt. Diese weisen einen Innenring und zwei Außenringe auf. Die Außenringe sind dabei spiegelsymmetrisch aufgebaut. Es werden Spannschrauben, den einen Außenring durchgreifend, in ein Innengewinde des zweiten Außenringes eingreifend angesetzt und angezogen. Hierdurch werden die zwei Außenringe axial aufeinander zu bewegt. Auf dem Innenring sind zwei gegenläufige Konusflächen ausgebildet. Durch axiales Verschieben der Außenringe wird somit der Innenring radial gestaucht und damit eine reib- bzw. kraftschlüssige Verbindung zwischen Innenmantelfläche des Innenringes und Außenmantelfläche einer Welle herbeigeführt.

Eine solche Ausgestaltung ist beispielsweise aus der DE 20 2004 018 828 U1 bekannt.

Eine dazu verschiedene Ausgestaltungsvariante einer Schrumpfscheibe bzw. eines Spannsatzes ist zweiteilig ausgebaut. Hierbei ist ein Innenring und ein Außenring vorhanden. Der Außenring wird axial gegenüber dem Innenring verschoben. Auch hier werden Schrauben eingesetzt, die den Außenring gegenüber dem Innenring axial verschieben und dadurch den Innenring radial stauchen. Hierbei ist ein Absatz oder Fortsatz vorhanden, so dass ein definierter axialer Verspannweg vorgegeben ist und darüber, eine zu erreichende Spannkraft aufgebracht ist. Eine solche Anordnung ist beispielsweise aus der EP 2 616 702 A1 bekannt.

Aufgabe der vorliegenden Erfindung ist es, eine Schrumpfscheibe bereitzustellen, die bei einfacher Handhabung eine höhere Spannkraft aufbringt bei gleicher oder geringerer Bauraumausnutzung.

Die zuvor genannte Aufgabe wird erfindungsgemäß mit den Merkmalen im Anspruch 1 gelöst.

Vorteilhafte Ausgestaltungsvarianten der Erfindung sind Gegenstand der abhängigen Ansprüche.

Die neuheitliche Schrumpfscheibe weist demnach zwei Außenringe, insbesondere mit unterschiedlicher Breite auf sowie einen Innenring. Die unterschiedliche Breite der Außenringe geht einher mit einem voneinander verschiedenen Kegelwinkel der Kegelflächen. Die Kegelflächen können auch Konusflächen genannt werden.

Ferner ist bevorzugt ein Anschlag vorgesehen, so dass ein definierter Weg zum Verspannen in Axialrichtung vorgegeben ist. Es erfolgt somit eine Montage bis zum Anschlag, was auch Montage auf Block genannt wird.

Bevorzugt hat dann ein Außenring mit geringerer Breite einen größeren Kegelwinkel in Relation zu dem Außenring mit größerer Breite, welche einen kleineren Kegelwinkel aufweist. Der Kegelwinkel wird zu der jeweiligen Axialrichtung hin gemessen. Die beiden Kegelflächen sind gegenläufig zueinander orientiert. Der in Relation schmalere Außenring weist eine Kegelfläche zwischen bevorzugt 6 und 20 Grad auf. Der Kegelwinkel des breiteren Außenringes ist demgegenüber kleiner. Mithin ist der Kegelwinkel des breiten Außenringes kleiner als der Kegelwinkel des dünneren Außenringes. Der kleinere Kegelwinkel, mithin der Kegelwinkel der dem breiteren Außenring zugeordnet ist, weist bevorzugt einen Kegelwinkel von 1 bis 5 Grad auf.

Es hat sich überraschenderweise als vorteilig herausgestellt, wenn der Faktor, um welchen sich die Kegelwinkel unterscheiden, mindestens gleich, bevorzugt größer ist, als der Faktor der Breitenverhältnisse beider Außenringe zueinander. Unter Faktor ist im Sinne dieser Erfindung das Relativverhältnis zu verstehen. Für die Außenringe bedeutet dies, dass das Absolutmaß der Breite des breiteren Außenrings geteilt wird durch das Absolutmaß der Breite des schmaleren Außenringes. Der Faktor der Kegelwinkel ist ebenfalls das Relativverhältnis beider Kegelwinkel zueinander. Dies bedeutet, dass der Faktor der Kegelwinkel zueinander sich berechnet aus dem größeren Kegelwinkel geteilt durch den kleineren Kegelwinkel. Der Faktor der Kegelwinkel zueinander ist mindestens gleich, bevorzugt größer, besonders bevorzugt um das 1,2-fache, insbesondere das 1,3-fache, besonders bevorzugt das 1,5-fache größer, als der Faktor der Außenringe zueinander. Hierdurch hat sich überraschenderweise ein Optimum aus zu erreichender Flächenpressung in Verbindung mit einem insbesondere an dem schmaleren Außenring entstehenden Kippmoment beim Anziehen der Schrumpfscheibe gezeigt.

Der Innenring weist einen Anschlag auf, insbesondere einen Stufenabsatz, an welchem ein Außenring zur Anlage kommt. Es können auch beide Außenringe an unterschiedlichen Anschlägen an dem Innenring zur Anlage kommen. Der Anschlag ist als umlaufender Stufenabsatz auf dem Innenring ausgebildet. Der Anschlag kann insbesondere als Stufenabsatz zwischen zwei gegenüberliegenden verschiedenen Kegelwinkeln ausgebildet sein. Es kommt der Außenring mit größerer Breite an dem Anschlag zur Anlage.

Besonders bevorzugt ist der Außenring mit größerer Breite mindestens 1,5 mal, bevorzugt 1,8 mal, insbesondere mehr als 2 mal, das 2,5-fache, insbesondere um das 3,5-fache breiter als der Außenring mit schmaler Breite. Der Außenring mit größerer Breite sollte jedoch nicht größer als 20 mal, bevorzugt nicht größer als 15 mal so breit sein, in Relation zu der schmaleren Breite des schmaleren Außenringes.

Weiterhin optional ergänzend oder alternativ kann der Außenring mit schmalerer Breite ebenfalls einen Anschlag aufweisen. Dieser Anschlag ist insbesondere an dem Außenring mit schmalerer Breite angebracht. Ist ein axialer Verschiebeweg erreicht, kommt der Anschlag des Außenringes an dem Innenring zur Anlage. Auch kann der Außenring mit größerer Breite einen Anschlag an dem Außenring selbst aufweisen, beispielsweise einen Stufenabsatz. An diesem Anschlag kommt dann der Innenring bei Anziehen der Schrumpfscheibe zur Anlage.

Aufgrund der Anschläge ist insbesondere das Anziehen der Schrumpfscheibe weggesteuert. Es ergibt sich somit eine optimale Kontrolle bezüglich des Anzugsmomentes im Vergleich zu einer kraftgesteuerten Schrumpfscheibe.

Weiterhin bevorzugt weist der Außenring mit schmalerer Breite Durchgangsbohrungen zum Durchführen von Spannschrauben auf. Der Außenring mit größerer Breite weist insbesondere Innengewinde auf, so dass die Spannschrauben hier eingeschraubt werden können.

In einer weiteren bevorzugten Ausgestaltungsvariante ist die Höhe des Innenringes im Querschnitt mindestens 2 mal, insbesondere 3 mal kleiner als eine in Relation dazu gemessene Höhe eines Außenringes.

Weiterhin besonders bevorzugt ist zwischen den zwei Außenringen eine Dichtung eingegliedert. Somit ist auch gewährleistet, dass keine Verschmutzung eindringt und auch nach einer jahrelangen Montagezeit ein Lösen der Schrumpfscheibe möglich ist.

Weiterhin besonders bevorzugt hat sich überraschenderweise erfindungsgemäß herausgestellt, dass der Teilkreis, auf dem die Spannschrauben radial umlaufend angeordnet sind, trotz des in Axialrichtung schmaleren Außenringes, in Radialrichtung weiter nach außen versetzt werden kann. Dies erleichtert die Montage der erfindungsgemäßen Schrumpfscheibe. Hierbei hat sich herausgestellt, dass zunächst eine Minimierung des Materialaufwandes des Innenringes erreicht werden kann, indem die maximale Wandstärke des Innenrings kleiner ist als der Nenndurchmesser der verwendeten Spannschrauben, insbesondere kleiner 90 %, bevorzugt kleiner 80 %, insbesondere kleiner 70 % als der Nenndurchmesser.

Damit nunmehr die Spannschrauben optimal auf dem Teilkreis angeordnet werden können, bei gleichzeitig optimaler Flächenpressung und Vermeiden einer Kipplastigkeit während des Spannens, ist der Durchmesser des Teilkreises größer als der maximale Außendurchmesser des Innenringes plus mindestens 1,4, bevorzugt mehr als 1,6 mal der Nenndurchmesser der verwendeten Spannschraube.

Im gesamten Rahmen dieser Erfindung kann die Schrumpfscheibe auch als Spannsatz bezeichnet werden.

Die mit der Erfindung zu erreichenden Vorteile liegen darin, dass das Montageergebnis über eine visuelle Kontrolle eines Spaltes überprüft werden kann und somit eine korrekte Montage sichergestellt ist. Die Spannkraft der Schrauben wirkt sich auf beide zu spannende Außenringe aus und presst somit den Innenring, insbesondere radial umlaufend über seine gesamte axiale Länge. Mit der Anordnung wird weiterhin eine optimale Nutzung der Spannkraft der Spannschrauben erreicht, so dass im Vergleich zum Stand der Technik relativ hohe Kegelwinkel gewählt werden können. Hierdurch wird wiederum bei in Relation zum Stand der Technik geringer axialer Verschiebung eine entsprechend höhere radiale Pressung erreicht. Somit sind geringe Verschiebewege und damit kleine, insbesondere axiale Bauräume möglich, was Montagevorteile der erfindungsgemäßen Schrumpfscheibe mit sich bringt.

Die Außenringe und Innenringe, insbesondere die Außenringe können konturnah in der Fertigung durch Schmieden hergestellt werden. Insbesondere durch die geringe Breite des Außenrings mit geringerer Breite kann der Materialeinsatz und beispielsweise auch die Länge der Durchgangsbohrungen reduziert werden, wodurch Fertigungskosten gesenkt werden.

Weitere Vorteile, Merkmale sind in den nachfolgenden Figuren beschrieben. Diese dienen dem einfachen Verständnis der Erfindung.
- Figur 1: zeigt einen Teilausschnitt im Querschnitt einer erfindungsgemäßen Schrumpfscheibe und
- Figur 2: zeigt eine Frontansicht auf eine erfindungsgemäße Schrumpfscheibe.

In den Figuren werden für gleiche oder ähnliche Bauteile dieselben Bezugszeichen verwendet, auch wenn eine wiederholte Beschreibung aus Vereinfachungsgründen entfällt.

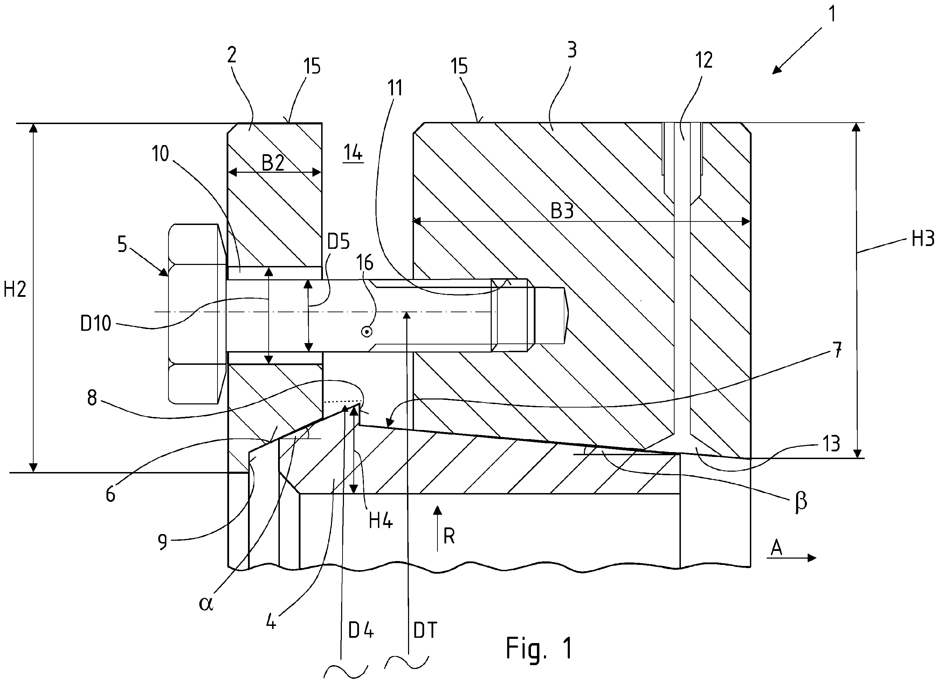

Figur 1 zeigt eine erfindungsgemäße Schrumpfscheibe 1 in einer Teilquerschnittsansicht. Vorhanden ist ein Außenring 2 mit geringerer Breite B2 sowie einen Außenring 3 mit demgegenüber größerer Breite B3. Die Breite B2, B3 bezieht sich auf die Axialrichtung A. Ferner ist ein Innenring 4 vorhanden. Die beiden Außenringe 2, 3 sind über Spannschrauben 5 miteinander gekoppelt. Die Spannschrauben 5 bringen eine axiale Spannkraft auf die Außenringe 2, 3 zueinander auf.

Der Innenring 4 weist zwei Kegelflächen 6, 7 auf. Die zwei Kegelflächen 6, 7 sind gegenläufig zueinander angeordnet. Die Kegelflächen 6, 7 weisen jeweils einen Kegelwinkel α, β auf, welcher bezogen ist auf die Axialrichtung A. Der Kegelwinkel α ist dabei relativ größer, bezogen auf den Kegelwinkel β. Der Kegelwinkel α ist dem Außenring 2 mit geringerer Breite B2 zugeordnet und beträgt bevorzugt zwischen 6 und 20 Grad. Der Kegelwinkel β, welcher kleiner ist als der Kegelwinkel α, ist dem Außenring 3 mit größerer Breite B2 zugeordnet. Die Breite der jeweiligen Kegelfläche 6, 7 in Axialrichtung entspricht in etwa auch der Breite B2, B3 eines jeweiligen Außenringes 2, 3.

An dem Innenring 4 ist ferner ein Anschlag 8 ausgebildet, in Form eines Stufenabsatzes. Der Stufenabsatz ist an einem Übergang der beiden gegenläufigen Kegelflächen 6, 7 zueinander angeordnet.

Bei weiterem, nicht näher dargestellten axialen Verspannen, stößt der Außenring 3 mit größerer Breite B3 gegen diesen Anschlag 8.

Es ist ein weiterer Anschlag dargestellt. Dieser ist an dem Außenring 2 mit geringerer Breite B2 angeordnet. Somit kann auch der Außenring 2 mit geringerer Breite an dem Innenring 4 zur Anlage kommen. In diesem Fall werden beide Außenringe 2, 3 gegen einen jeweiligen Anschlag 8, 9 bewegt bzw. auf Bock gefahren. Es würde bei 14 ein Spalt verbleiben, der auch als Nullspalt ausgebildet sein kann.

Die Höhe H4 des Innenringes 4 ist entsprechend geringer als die Höhe H2, H3 eines jeweiligen Außenringes 2, 3. Gemessene Höhe ist hier der jeweilige maximale Höhenwert bzw. die maximale Ausdehnung in Radialrichtung R verwendet.

Die Höhe kann auch als jeweilige Wandstärke bezeichnet werden. Somit ist die Höhe H4 gleich die Wandstärke des Innenringes 4 in Radialrichtung. Diese ist bevorzugt kleiner als der Nenndurchmesser der Spannschraube 5. Der Einfachheit halber kann der Nenndurchmesser für die Spannschraube 5 hier mit dem Durchmesser D5 verglichen werden.

Weiterhin ist besonders bevorzugt der Durchmesser des Teilkreises DT größer als der maximale Außendurchmesser D4 des Innenringes 4 plus 1,4 mal der Nenndurchmesser der Spannschraube 5, bevorzugt größer 1,6 mal der Nenndurchmesser der Spannschraube 5. Erfindungsgemäß ist es überraschenderweise möglich, den Teilkreis T weiter nach außen zu setzen, um dadurch eine bessere Flächenpressung im Bereich der Kegelfläche 6 zu erreichen, wobei gleichzeitig das entstehende Kippmoment des schmaleren Außenringes 2 zu vernachlässigen ist.

Der Außenring 2 mit geringerer Breite B2 weist eine Durchgangsbohrung 10 auf, durch welchen die Spannschraube 5 hindurchgreift. Der Außenring 3 mit größerer Breite B3 weist ein Innengewinde 11 auf zum Verschrauben der Spannschraube 5. Die Durchgangsbohrung 10 ist in ihrem Durchmesser D10 größer als der Außendurchmesser D5 des Schaftes der Spannschraube 5. Hierdurch können insbesondere während des Anziehvorganges in Axialrichtung A unterschiedliche Positionen der Spannschraube 5 in Radialrichtung R eingenommen werden, ohne dass ein Verspannen in der Spannschraube 5 selbst erfolgt. In dem Außenring 2, 3 ist ferner ein Druckkanal 12 vorgesehen. Nach Lösen der Verschraubung der Schrumpfschreibe 1 kann durch Aufbringen eines entsprechenden Fluiddrucks, beispielweise Öl, ein Lösen des Außenrings 3 mit größerer Breite erfolgen. Der Druckkanal 12 weist insbesondere eine umlaufende Nut 13 auf, so dass sich das eingebrachte Öl entsprechend verteilt und den Außenring 3 mit größerer Breite B2 von der Kegelfläche 7 löst. Der Außenring 2 mit geringerer Breite löst sich insbesondere aufgrund des höheren Kegelwinkels α.

Zwischen den beiden Außenringen 2, 3 ist ein Spalt 14 dargestellt. Der Spalt 14 verringert sich bei Einnehmen eines Montagesitzes durch axiale Verschiebung der Außenringe zueinander. Der Spalt 14 kann sich bis zu einem Nullspalt verringern, mithin die beiden Außenringe 2, 3 liegen dann aneinander an. Es kann jedoch auch ein geringfügiger Spalt 14 verbleiben. Bevorzugt kann in diesem Spalt 14 ein nicht näher dargestelltes Dichtmittel angeordnet sein, beispielsweise eine Dichtscheibe. Auch kann umlaufend eine Dichtung auf die jeweilige Außenmantelfläche 15 eines Außenringes 2, 3 aufgebracht werden.

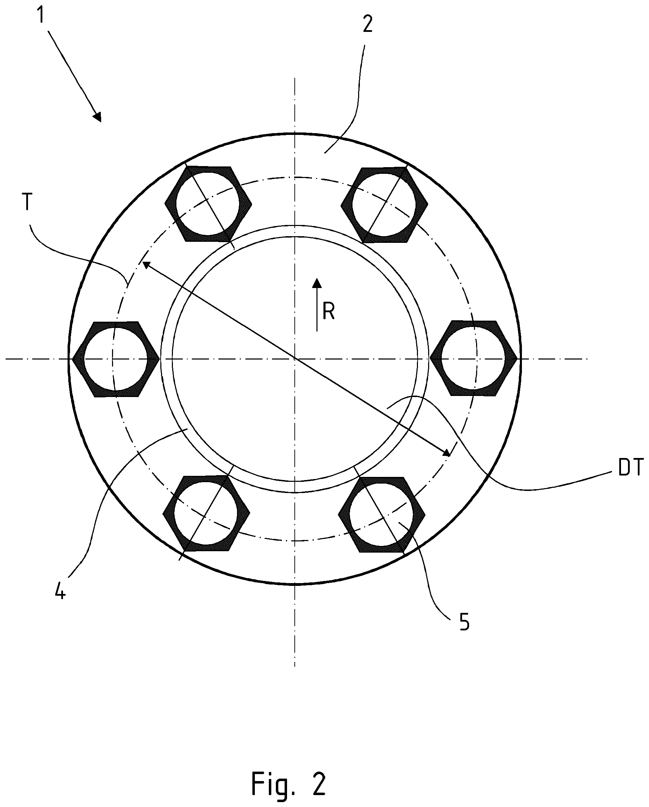

Figur 2 zeigt eine Frontansicht auf eine erfindungsgemäße Schrumpfscheibe 1.

Radial umlaufend sind mehrere Spannschrauben 5 angeordnet. Ein Teilkreis T, auf welchem die Schrauben 5 angeordnet werden, kann beliebig gewählt werden. Ein gemäß Figur 1 um eine orthogonale Achse 16 zur Radialrichtung R und zur Axialrichtung A während des Anziehens aufgebrachtes Moment ist bei der erfindungsgemäßen Schrumpfscheibe gering. So kann der Teilkreis T, beispielsweise derart ausgeführt sein, dass die Spannschrauben 5, bezogen auf die Radialrichtung R möglichst weit außen an den Außenringen 2, 3 angeordnet ist. Das aufgebrachte Moment in die Achse 16 ist gering. Je weiter die Spannschraube 5 außen aufgebracht ist, desto einfacher kann ein entsprechendes Werkzeug angesetzt werden, um die Schrumpfscheibe 1 zu montieren.

### Bezugszeichen:

- 1 -: Schrumpfscheibe
- 2 -: Außenring (geringere Breite)
- 3 -: Außenring (größere Breite)
- 4 -: Innenring
- 5 -: Spannschraube
- 6 -: Kegelfläche zu 2
- 7 -: Kegelfläche zu 3
- 8 -: Anschlag zu 4
- 9 -: Anschlag zu 2
- 10 -: Durchgangsbohrung
- 11 -: Innengewinde
- 12 -: Öldruckkanal
- 13 -: Nut
- 14 -: Spalt
- 15 -: Außenmantelfläche
- 16 -: Achse

- T -: Teilkreis
- B2 -: Breite zu 2
- B3 -: Breite zu 3
- D5 -: Durchmesser zu 5
- D10 -: Durchmesser zu 10
- A -: Axialrichtung
- R -: Radialrichtung
- α -: Kegelwinkel zu 6
- β -: Kegelwinkel zu 7

- H4: Höhe zu 4
- H2: Höhe zu 2
- D4: Durchmesser zu 4
- DT: Durchmesser zu T

## Patentansprüche

1. Schrumpfscheibe (1) zum kraft- bzw. reibschlüssigen Verbinden einer Welle mit einer Hohlwelle oder dergleichen, mit einem innenliegenden Innenring (4), dessen Außenmantelfläche zwei zueinander gegenläufige Kegelflächen (6, 7) aufweist und mit zwei äußeren Außenringen (2, 3), welche auf den Kegelflächen (6, 7) aufliegen und über Spannschrauben (5) miteinander gekoppelt sind, **dadurch gekennzeichnet, dass** die Außenringe (2, 3) in ihrem Querschnitt eine voneinander verschiedene Breite (B2, B3) aufweisen und dass die Kegelflächen (6, 7) in Relation zueinander einen verschiedenen Kegelwinkel (α, β) aufweisen, und dass der Innenring (4) einen Anschlag (8) aufweist, an welchem der Außenring (3) zur Anlage kommt.

2. Schrumpfscheibe (1) nach Anspruch 1, **dadurch gekennzeichnet, dass** der Außenring (2) mit geringerer Breite (B2) einen größeren Kegelwinkel (α) aufweist, in Relation zu dem Außenring (3) mit größerer Breite (B3), der einen kleineren Kegelwinkel (β) aufweist.

3. Schrumpfscheibe (1) nach einem der vorangehenden Ansprüche, **dadurch gekennzeichnet, dass** der Außenring (2) mit schmalerer Breite (B2) einen Anschlag (9) aufweist.

4. Schrumpfscheibe (1) nach einem der vorangehenden Ansprüche, **dadurch gekennzeichnet, dass** der Außenring (3) mit größerer Breite (B2) Innengewinde (11) aufweist, welcher zur Verschraubung mit den Spannschrauben (5) dient und/oder dass der Außenring (2) mit geringerer Breite (B2) Durchgangsbohrungen (10) aufweist, zur Durchführung der Spannschrauben (5).

5. Schrumpfscheibe (1) nach einem der vorangehenden Ansprüche, **dadurch gekennzeichnet, dass** eine Höhe (H4) des Innenringes (4) mindestens 2 mal, insbesondere 3 mal kleiner ist, als eine in Relation dazu gemessene Höhe (H2, H3) eines Außenringes (2, 3).

6. Schrumpfscheibe (1) nach einem der vorangehenden Ansprüche, **dadurch gekennzeichnet, dass** der Kegelwinkel (α) des dünneren Außenringes zwischen 6 und 20 Grad beträgt und dass der Kegelwinkel (β) des breiteren Außenringes (3) in Relation dazu kleiner ist, wobei insbesondere der kleinere Kegelwinkel (β) des breiteren Außenrings (3) einen Kegelwinkel (β) von 1 bis 5 Grad aufweist.

7. Schrumpfscheibe (1) nach einem der vorangehenden Ansprüche, **dadurch gekennzeichnet, dass** der Kegelwinkel (β) des breiteren Außenringes (3) kleiner ist als der Kegelwinkel (α) des dünneren Außenringes (2), wobei der Faktor, um den die beiden Kegelwinkel (α, β) voneinander verschieden ist, mindestens gleich oder größer ist, als der Faktor des relativen Breitenunterschieds von dünnerem Außenring (2) zu breiterem Außenring (3).

8. Schrumpfscheibe (1) nach einem der vorangehenden Ansprüche, **dadurch gekennzeichnet, dass** zwischen den beiden Außenringen (2, 3) eine Dichtung eingegliedert ist.

9. Schrumpfscheibe (1) nach einem der vorangehenden Ansprüche, **dadurch gekennzeichnet, dass** die maximale Wandstärke des Innenrings (4) kleiner als der Nenndurchmesser einer Spannschraube (5) ist, insbesondere ist die Wandstärke des Innenringes (4) kleiner 90 %, bevorzugt kleiner 80 % und insbesondere kleiner 70 % des Nenndurchmessers einer Spannschraube (5).

10. Schrumpfscheibe (1) nach einem der vorangehenden Ansprüche, **dadurch gekennzeichnet, dass** der maximale Durchmesser (D4) des Teilkreises (DT), auf welchem die Spannschrauben (5) verteilt sind, größer ist als der maximale Außendurchmessers (D4) des Innenringes (4) plus mehr 1,4 mal der Nenndurchmesser einer Spannschraube (5), insbesondere plus mehr 1,6 mal des Nenndurchmessers einer Spannschraube (5), bevorzugt mehr als 2 mal der Nenndurchmesser einer Spannschraube (5).
